# EUROPÄISCHE PATENTSCHRIFT

(11) **EP 0 434 970 B1**
(45) Veröffentlichungstag und Bekanntmachung des Hinweises auf die Patenterteilung: **23.02.1994**
(21) Anmeldenummer: 90122130.9
(22) Anmeldetag: 20.11.1990
(51) Int. Cl.: F02D 41/12

(54) **Verfahren zur Motorschleppmomentbegrenzung**
Method for the limiting of an engine traction torque
Procédé de limitation du couple de traction d'un moteur

(30) Priorität: 23.12.1989 DE 3942862
(43) Veröffentlichungstag der Anmeldung: 03.07.1991
(73) Patentinhaber: ROBERT BOSCH GMBH, 70442 Stuttgart (DE)
(72) Erfinder: Demel, Herbert, Dr.-Ing., W-7107 Bad Wimpfen (DE)

(56) Entgegenhaltungen:
- EP-A- 0 104 539
- EP-A- 0 309 868
- WO-A-89/08776
- FR-A- 2 149 840
- FR-A- 2 591 960
- US-A- 4 506 638
- PATENT ABSTRACTS OF JAPAN vol. 8, no. 132 (M-303)(1569) 20 Juni 1984, & JP-A-59 34430 (TOYO KOGYO K.K.) 24 Februar 1984

## Beschreibung

### Stand der Technik

Die Erfindung betrifft ein Verfahren zur Motorschleppmomentbegrenzung eines mit Brennkraftmaschine ausgestatteten Fahrzeugs.

Bei Einspritz- und modernen Vergasersystemen ist es allgemein bekannt, die Kraftstoffzufuhr zum Motor im Schubbetrieb mit dem Ziel abzuschalten, den Kraftstoffverbrauch und die Schadstoffemission zu reduzieren.

Aus der DE-OS 32 10 512 ist bekannt, daß Absperren der Kraftstoffzufuhr im Schiebebetrieb nur oberhalb einer bestimmten Brennkraftmaschinentemperatur zuzulassen. Hierzu wird die entsprechende Temperatur der Ansaugluft und/oder das Ausgangssignal eines im Bereich der Aufbauten des Kraftfahrzeugs angeordneten Temperatursensors verarbeitet. Es wird davon ausgegangen, daß bei niedrigen Temperaturen schnee- und eisbedeckte Fahrbahnen vorliegen könnten, bei der die im Schiebebetrieb auftretende Bremswirkung der Brennkraftmaschine nachteilig sein kann, da bei hohem Motorschleppmoment die Gefahr des Rutschens bzw. Schleuderns besteht. Da somit nur während der warmen Jahreszeit, also während eines nicht unerheblichen Zeitraumes im Jahr, eine Schubabschaltung erfolgt, ist mit einem entsprechend erhöhten Kraftstoffverbrauch zu rechnen.

Ferner ist es aus der DE-OS 38 08 692 bekannt, zur Vermeidung eines zu großen Motorschleppmoments das im Schubbetrieb auftretende Bremsmoment auf einen Wert zu begrenzen, der ein dauerhaftes Blockieren der angetriebenen Räder verhindert. Die drehzahlabhängige Resteinspritzmenge der Brennkraftmaschine wird zeitabhängig so gesteuert, daß das Schleppmoment keine unzulässig hohen Werte erreicht. Die zeitabhängige Erniedrigung oder Erhöhung der Resteinspritzmenge erfolgt rampenförmig. Diese zeitlich rampenförmige Restmengenabhängigkeit kann zusätzlich von Motorbetriebsparametern, nämlich Temperatur, Geschwindigkeit und eingelegtem Gang, beeinflußt werden.

In der internationalen Anmeldung WO 89/04782 wird ein Verfahren zur Kurvenfahrterkennung beschrieben. Hierzu werden Differenzen von Geschwindigkeitssignalen sich diagonal gegenüberliegenden Rädern und zeitliche Änderungssignale dieser Differenzen gebildet. überschreitet eines dieser Signale eine vorgegebene Schwelle, so wird ein Kurvenerkennungssignal abgegeben.

In der EP,A2,0 104 539 wird eine schlupfunabhängige Reduzierung des Bremsmomentes im Schiebebetrieb vorgestellt, wobei im Schiebebetrieb eine von der Motordrehzahl abhängige Einspritzung (Restmenge) getätigt wird. Insbesondere kann für den Winterbetrieb eine außentemperaturabhangige Restmengeneinspritzung vorgesehen sein. Durch die Erfassung des momentanen Motormoments und der Motordrehzahl kann die tatsächlich abgegebene Motorleistung bestimmt werden und auf Sollwerte geregelt werden. Hierzu kann eine Gangerkennung vorgesehen sein. Im einleitenden Teil der EP,A2,0 104 539 wird darüber hinaus die Ermittelung des Radschlupfes während des Schiebebetriebs beschrieben, wobei bei Überschreitung eines vorgegebenen Schlupfwertes das Bremsmoment durch Erhöhung der Restmenge reduziert wird.

In der US,A,4,506,638 findet eine Schubabschaltung der Kraftstoffzufuhr abhängig von der Kühltemperatur des Motors, der Drehzahl des Motors und abhängig von der Information, ob sich das Fahrzeug im Vierradbetrieb befindet, statt.

In der EP,A2,0 309 868 wird die Schubabschaltung der Kraftstoffzufuhr abhängig von dem erfaßten Radschupf getätigt.

In der FR,A1,2,591,960 wird der Kurvengrenzgeschwindigkeitsbereich dadurch ermittelt, indem festgestellt wird, daß eine Lenkwinkeländerung keine Änderung der Querbeschleunigung zur Folge hat. In diesem Fall haben die Reifen das Maximum ihrer Seitenführungkraft überschritten und das Fahrzeug beginnt, die vom Fahrer vorgegebene Kurvenbahn zu verlassen. Befindet sich das Fahrzeug im Kurvengrenzgeschwindigkeitsbereich, so wird die Drosselklappe im Sinne einer Leistungsverminderung verstellt.

Das erfindungsgemäße Verfahren mit den im Hauptanspruch genannten Merkmalen hat demgegenüber den Vorteil, daß zur Kraftstoffzumessung während des Schubbetriebs festgestellt wird, ob sich das Fahrzeug in einer Kurvenfahrt oder in einer Geradeausfahrt befindet. Dazu wird erfindungsgemäß der Schubbetrieb durch die Stellung des Fahrpedals und der erfaßten Drehzahl der Brennkraftmaschine erfaßt. Weiterhin kann die Kraftstoffzumessung während des Schubbetriebs abhängig von der Bewertung des momentan vorliegenden Fahrzustand des Fahrzeugs zur Reduktion des Motorschleppmoments der Brennkraftmaschine die Kraftstoffzumessung erhöht werden, wobei zur Bewertung des momentanen Fahrzustands festgestellt wird, ob sich das Fahrzeug in einer Kurvenfahrt oder in einer Geradeausfahrt befindet.

Erfindungsgemäß werden Fahrzustandsgrößen herangezogen, die -ohne zeitliche Verzögerung- direkt den Betriebspunkt des Motors im Schubbetrieb bestimmen. Hierdurch ist es möglich, stets unverzögert bis nahe an den pysikalischen Grenzbereich heranzugehen, bei dem noch keine gefährlichen Fahrsituationen auftreten. Es ist stets eine minimale Kraftstoffzufuhr gewährleistet, die jedoch nur dann bis auf das Niveau der Schubabschaltung heruntergeht, wenn dabei die Fahrsicherheit gewährleistet ist. Treten Fahrzustandsgrößen mit risikobehafteten Werten auf, so erfolgt keine Schubabschaltung.

Vorzugsweise kann als Fahrzustandsgröße die Fahrgeschwindigkeit und/oder die Motordrehzahl und/oder die Gangstellung und/oder eine Kurvenfahrterkennung und/oder eine Querbeschleunigungserkennung und/oder eine Reibwerterkennung der Reifen und/oder eine Schlupferkennung der Reifen, insbesondere der Antriebsräder, verarbeitet werden. Durch die Kurvenfahrt-/Querbeschleunigungserkennung wird es möglich, die in dieser Fahrsituation vorliegenden Reibwerte bis nahe an ihre physikalische Grenze voll auszuschöpfen. Entsprechendes gilt für die Geradeausfahrt, bei der unter normalen Umständen zur Kurvenfahrt unterschiedliche Motorschleppmomente wirken können.

Nach einer Weiterbildung der Erfindung ist vorgesehen, daß die Reduktion des Motormoments bis auf das Schubabschaltniveau erfolgt.

Um das Motormoment langsam zurückzunehmen, kann -nach einer bevorzugten Ausführungsform- eine Einzelzylinderabschaltung erfolgen.

Bei der Reduktion des Motormoments im Schubbetrieb bzw. zur Durchführung einer Schubabschaltung kann das Antriebskonzept Berücksichtigung finden. Je nachdem, ob ein Frontantrieb, ein Heckantrieb oder ein Allradantrieb vorliegt, erfolgt eine entsprechend angepaßte Motormomentrücknahme bzw. direkte Schubabschaltung.

Als beeinflussende Fahrzustandsgröße wurde bereits die Kurvenfahrterkennung genannt. Diese kann mittels eines Lenkwinkelsensors detektiert werden. Es ist jedoch auch möglich, sie durch entsprechende Sensoren an den Rädern zu erfassen. Bevorzugt kann die Kurvenfahrterkennung mit einer Reibwerterkennung gekoppelt sein. Ferner ist es möglich, sie mit einer Leerlaufdrehzahlanhebung zu kombinieren. Die Reduktion des Motorschleppmoments erfolgt dann über die Leerlaufdrehzahlanhebung bis zur Leerlaufdrehzahl mit "normalem" Leerlaufdrehzahl-Kraftstoffdurchflußniveau und dann -im weiteren Verlauf- bis zur Schubabschaltung. Die Reduktion des Motorschleppmoments kann kontinuierlich oder schrittweise erfolgen.

Vorzugsweise wird für eine Bewertung des Fahrzustands zunächst die Stellung des Fahrpedals des Fahrzeugs zur Erkennung des Betriebszustands erfaßt und anschließend eine die Kurvenfahrt oder die Geradeausfahrt feststellende Fahrbedingungsprüfung vorgenommen. Ferner erfolgt eine Ermittlung des Motorschleppmoments unter Berücksichtigung der Motordrehzahl und der Gangstellung des Getriebes. Überdies erfolgt eine Reibwerterkennung und/oder eine Schlupfsensierung der Antriebsräder und/oder eine Berücksichtigung des Antriebskonzepts. Schließlich wird je nach dem Bewertungsergebnis des Fahrzustands bei unkrtischem Fahrzustand eine Schubabschaltung, bei einem Fahrzustand nahe des physikalischen Grenzbereichs eine Reduktion des Motormoments kontinuierlich oder schrittweise und bei einem kritischen Fahrzustand keine Schubabschaltung durchgeführt.

Insgesamt ist anzumerken, daß sich die Fahrsicherheit durch die erfindungsgemäßen Maßnahmen bei nur minimalen Zusatzkosten im physikalischen Grenzbereich erheblich verbessern läßt.

### Zeichnung

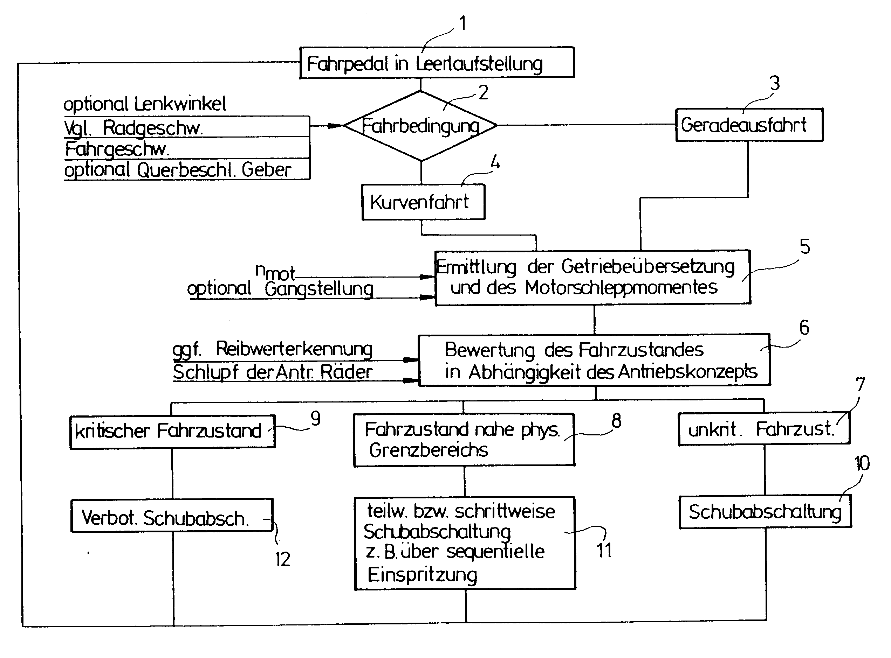

Die Erfindung wird im folgenden anhand der Figur näher erläutert. Diese zeigt ein Flußdiagramm, das verschiedene Bedingungen für die Reduktion eines Motormoments im Schubbetrieb eines mit Brennkraftmaschine ausgestatteten Fahrzeugs darstellt, wobei die Reduktion des Motormoments vorzugsweise bis auf Schubabschaltungsniveau vorgenommen wird.

### Beschreibung von Ausführungsbeispielen

Die Figur soll das erfindungsgemäße Verfahren zur Motorschleppmomentbegrenzung eines mit Brennkraftmaschine ausgestatteten Fahrzeugs verdeutlichen.

Es erfolgt eine Erfassung und Bewertung des Fahrzustandes des Fahrzeugs. Ausgangspunkt ist der Verfahrensschritt 1, mit dem die Stellung des Fahrpedals des nicht näher dargestellten Fahrzeugs erfaßt wird. Voraussetzung für eine Schubabschaltung oder Reduktion des Motormoments im Schubbetrieb ist die Detektion der Leerlaufstellung des Fahrpedals. Liegt diese nicht vor, so darf keine Schubabschaltung erfolgen. Alternativ ist es jedoch auch möglich, schon bei einer Rücknahme der Fahrpedalstellung eine Reduktion des Motormoments im Schubbetrieb oder sogar eine Schubabschaltung vorzunehmen.

Im Verfahrensschritt 2 werden die momentan vorliegenden Fahrbedingungen des Fahrzeugs erfaßt. Dieses erfolgt durch Ermittlung und Auswertung von Fahrzustandsgrößen. Insbesondere kann eine Auswertung des Lenkwinkels für eine Kurvenfahrterkennung erfolgen. Ferner ist eine Kurvenfahrterkennung zusätzlich oder alternativ auch durch Vergleich der Radgeschwindigkeiten des Fahrzeugs möglich. Als weitere Fahrzustandsgröße läßt sich die Fahrgeschwindigkeit heranziehen. Ferner ist es möglich zusätzlich oder alternativ die Querbeschleunigung des Fahrzeugs mittels eines Querbeschleunigungsgebers zur Ermittlung der Fahrbedingung heranzuziehen. Somit kann im Verfahrensschritt 2 eine Geradeausfahrt 3 oder eine Kurvenfahrt 4 als Fahrbedingung detektiert werden.

Das jeweilige Ergebnis wird im Verfahrensschritt 5 zur Ermittlung des Motorschleppmoments verarbeitet. Hierzu wird die Motordrehzahl nₘₒₜ und die Getriebeübersetzung mit herangezogen. Die Getriebeübersetzung ergibt sich aus der Abfrage der Gangstellung. Zur Ermittlung des Motorschleppmoments können gegebenenfalls zusätzlich Motorbetriebsbedingungen, wie Kühlmittel- und/oder Öltemperatur, herangezogen werden.

Im nächsten Verfahrensschritt 6 erfolgt für die Bewertung des vorliegenden Fahrzustands vorzugsweise eine Berücksichtigung des Antriebskonzepts des Fahrzeugs. Mithin ist entscheidend, ob es sich um ein Fahrzeug mit Frontantrieb, Heckantrieb oder Allradantrieb handelt. Als weitere Eingangsgröße wird gegebenenfalls eine Reibwerterkennung sowie eventuell auftretender Schlupf der Antriebsräder herangezogen.

Als Ergebnis des Verfahrensschritts 6 ergibt sich entweder ein unkritischer Fahrzustand 7, ein Fahrzustand 8 nahe des physikalischen Grenzbereichs oder ein kritischer Fahrzustand 9.

Liegt ein unkritischer Fahrzustand vor, so kann eine Schubabschaltung erfolgen. Wird ein Fahrzustand 8 nahe des physikalischen Grenzbereichs detektiert, so wird eine teilweise bzw. schrittweise erfolgende Schubabschaltung vorgenommen. Dieses kann z.B. über sequentielle Einspritzung, das heißt also Einzelzylinderabschaltung, erfolgen. Wird ein kritischer Fahrzustand 9 ermittelt, so ist eine Schubabschaltung verboten. In der Figur ist die Schubabschaltung mit dem Bezugszeichen 10, die teilweise erfolgende Schubabschaltung mit dem Bezugszeichen 11 und das Verbot der Schubabschaltung mit dem Bezugszeichen 12 gekennzeichnet.

Durch das erfindungsgemäße Verfahren ist es möglich, die Fahrsicherheit entscheidend zu verbessern, wobei dennoch eine erhebliche Kraftstoffeinsparung und Verminderung der Schadstoffemission erzielt wird. Der besondere Vorteil besteht darin, daß eine preiswerte Lösung vorgeschlagen wird, die gefährliche Fahrsituationen im Schubbetrieb verhindert.

## Patentansprüche

1. Verfahren zur Kraftstoffzumessung einer Brennkraftmaschine im Schubbetrieb, bei dem
- der Schubbetrieb durch die Stellung des Fahrpedals und der erfaßten Drehzahl der Brennkraftmaschine erfaßt wird, und
- die Schubbetriebskraftstoffzumessung abhängig vom momentanen Fahrzustand des Fahrzeug bestimmt wird,
dadurch gekennzeichnet, daß
- der momentane Fahrzustand zumindest Kurvenfahrt und Geradeausfahrt des Fahrzeugs unterscheidet ,
wobei sich abhängig von einer festgestellten Kurvenfahrt , zumindest unter bestimmten Betriebsbedingungen, eine andere Schubbetriebskraftstoffzumessung als bei der Geradeausfahrt ergibt.

2. Verfahren nach Anspruch 1, dadurch gekennzeichnet, daß je nach Fahrzustand
- eine Abschaltung der Kraftstoffzufuhr bei unkristischen Fahrzuständen stattfindet oder
- die für den Normalbetrieb der Brennkraftmaschine berechnete Krafstoffmenge bei kritischen Fahrzuständen zugeführt wird oder
- eine gegenüber dem Normalbetrieb der Brennkraftmaschine reduzierte Kraftstoffmenge bei Fahrzuständen nahe des physikalischen Grenzbereichs zugeführt wird.

3. Verfahren nach Anspruch 1 oder 2, dadurch gekennzeichnet, daß zur Feststellung, ob sich das Fahrzeug in einer Kurvenfahrt oder in einer Geradeausfahrt befindet die Signale eines Lenkwinkeldetektors herangezogen werden.

4. Verfahren nach Anspruch 1 oder 2, dadurch gekennzeichnet, daß zur Feststellung, ob sich das Fahrzeug in einer Kurvenfahrt oder in einer Geradeausfahrt befindet die Drehzahlen wenigstens zweier Fahrzeugräder herangezogen werden.

5. Verfahren nach Anspruch 1, **dadurch gekennzeichnet,** daß zur Bewestung des momentanen Fahrzustands die Fahrgeschwindigkeit und/oder die Motordrehzahl und/oder die Gangstellung und/oder eine Kurvenfahrterkennung und/oder eine Querbeschleunigungserkennung und/oder Reibwerterkennung der Reifen und/oder eine Schlupferkennung der Reifen, insbesondere der Antriebsräder, verarbeitet wird.

6. Verfahren nach einem der vorhergehenden Ansprüche, **dadurch gekennzeichnet,** daß die Reduktion des Motorschleppmoments bis auf das Schubabschaltungsniveau erfolgt.

7. Verfahren nach einem der vorhergehenden Ansprüche, **dadurch gekennzeichnet,** daß bei der Schubabschaltung eine Einzelzylinderabschaltung vorgenommen wird.

8. Verfahren nach einem der vorhergehenden Ansprüche, **gekennzeichnet durch** die Berücksichtigung des Antriebskonzepts, wie Frontantrieb, Heckantrieb oder Allradantrieb.

9. Verfahren nach einem der vorhergehenden Ansprüche, **dadurch gekennzeichnet,** daß die Reduktion des Motorschleppmoments über eine Leerlaufdrehzahlanhebung bis zur Leerlaufdrehzahl und dann bis zur Schubabschaltung vorgenommen wird.

10. Verfahren nach einem der vorhergehenden Ansprüche, **dadurch gekennzeichnet,** daß die Reduktion des Motorschleppmoments kontinuierlich oder schrittweise erfolgt.

11. Verfahren nach einem der vorhergehenden Ansprüche, **dadurch gekennzeichnet,** daß für die Bewertung des Fahrzustands eine Ermittlung des Motorschleppmoments unter Berücksichtigung der Motordrehzahl und der Gangstellung des Getriebes vorgenommen wird.

12. Verfahren nach einem der vorhergehenden Ansprüche, **dadurch gekennzeichnet,** daß zur Ermittlung des Motorschleppmoments Motorbetriebsbedingungen und/oder Motorzustandsdaten, insbesondere Kühlmittel- und/oder Öltemperatur, berücksichtigt werden.

13. Verfahren nach einem der vorhergehenden Ansprüche, **dadurch gekennzeichnet,** daß bei der Bewertung des Fahrzustands die Reibwerterkennung und/oder der Schlupf der Antriebsräder und/oder das Antriebskonzept berücksichtigt wird.

## Claims

1. Method for fuel metering in an internal combustion engine in override operation, in which
- the override operation is recorded by the position of the accelerator pedal and the recorded rotational speed of the internal combustion engine, and
- the override operation fuel metering is determined as a function of the instantaneous driving condition of the vehicle,
characterized in that
- the instantaneous driving condition distinguishes at least between travel round a curve and travel in a straight line by the vehicle, with, at least under certain operating conditions, an override operation fuel metering when travel round a curve has been determined which is different to that for travel in a straight line.

2. Method according to Claim 1, characterized in that, depending on the driving condition,
- the fuel supply is cut off in the case of uncritical driving conditions or
- the fuel quantity calculated for the normal operation of the internal combustion engine is supplied in the case of critical driving conditions or
- a fuel quantity reduced relative to the normal operation of the internal combustion engine is supplied in the case of driving conditions near the physical boundary region.

3. Method according to Claim 1 or 2, characterized in that the signals of a steering angle detector are employed to determine whether the vehicle is travelling round a curve or in a straight line.

4. Method according to Claim 1 or 2, characterized in that the rotational speeds of at least two driving wheels are employed to determine whether the vehicle is travelling round a curve or in a straight line.

5. Method according to Claim 1, characterized in that the travelling speed and/or the engine rotational speed and/or the gear selected and/or recognition of travel round a curve and/or transverse acceleration recognition and/or recognition of the tyre friction value and/or tyre slip recognition, particularly in the case of the driving wheels, is processed in order to assess the instantaneous driving condition.

6. Method according to one of the preceding claims, characterized in that the engine braking torque is reduced to the level for fuel cut-off during override [sic].

7. Method according to one of the preceding claims, characterized in that single-cylinder fuel cutoff is used in the case of fuel cut-off during override.

8. Method according to one of the preceding claims, characterized by account being taken of the drive concept, such as front-wheel drive, rear-wheel drive or all-wheel drive.

9. Method according to one of the preceding claims, characterized in that the engine braking torque is reduced by increasing the idling rotational speed as far as the idling rotational speed and then as far as fuel cut-off during override [sic].

10. Method according to one of the preceding claims, characterized in that the reduction in the engine braking torque takes place continuously or in steps.

11. Method according to one of the preceding claims, characterized in that, for the assessment of the driving condition, the engine braking torque is determined taking account of the engine rotational speed and the gear selected.

12. Method according to one of the preceding claims, characterized in that engine operating conditions and/or engine condition data, in particular coolant and/or oil temperature, are taken into account in the determination of the engine braking torque.

13. Method according to one of the preceding claims, characterized in that the friction value recognition and/or the slip of the driving wheels and/or the drive concept are taken into account in the assessment of the driving condition.

## Revendications

1. Procédé de dosage de carburant d'un moteur thermique en mode de poussée (inertie forcée) selon lequel :
- on détecte le mode de poussée par la position de la pédale d'accélérateur et par la vitesse de rotation du moteur thermique et,
- on détermine le dosage du carburant en mode de poussée en fonction de l'état de conduite instantanée du véhicule,
procédé caractérisé en ce que
- on distingue pour l'état de conduite instantanée au moins la trajectoire courbe et la trajectoire en ligne droite du véhicule,
- et suivant que l'on constate une trajectoire courbe, on a au moins dans certaines conditions de fonctionnement, un dosage différent du carburant en mode de poussée que pour la trajectoire en ligne droite.

2. Procédé selon la revendication 1, caractérisé en ce que suivant l'état de conduite,
- on coupe l'alimentation en carburant pour des états de conduite non critiques ou
- on fournit la quantité de carburant calculée pour le fonctionnement normal du moteur thermique pour des états de conduite critiques ou
- on réduit la quantité de carburant dans l'états de conduite proches de la plage limite physique par rapport aux quantités de carburant du fonctionnement normal du moteur thermique.

3. Procédé selon la revendication 1 ou 2, caractérisé en ce que pour déterminer si le véhicule est en trajectoire courbe ou en trajectoire rectiligne, on utilise les signaux d'un détecteur d'angle de direction.

4. Procédé selon la revendication 1 ou 2, caractérisé en ce que pour détecter si le véhicule est en trajectoire courbe ou en trajectoire rectiligne, on utilise les vitesses de rotation d'au moins deux roues du véhicule.

5. Procédé selon la revendication 1, caractérisé en ce que pour exploiter l'état de conduite instantané du véhicule, on traite la vitesse du véhicule et/ou la vitesse de rotation du moteur et/ou le rapport de vitesse et/ou une détection de trajectoire courbe et/ou une détection d'accélération transversale et/ou une détection du coefficient d'adhérence des pneumatiques et/ou une détection du patinage des pneumatiques, notamment des roues motrices.

6. Procédé selon l'une des revendications précédentes, caractérisé en ce qu'on réduit le couple de traction du moteur jusqu'au niveau de la coupure de poussée.

7. Procédé selon l'une des revendications précédentes, caractérisé en ce que pour couper la poussée on coupe séparément un cylindre.

8. Procédé selon l'une des revendications précédentes, caractérisé en ce qu'on tient compte du concept d'entraînement tel qu'un entraînement par traction ou par propulsion ou d'un entraînement avec toutes les roues motrices.

9. Procédé selon l'une des revendications précédentes, caractérisé en ce qu'on réduit le couple de traction du moteur en augmentant la vitesse de rotation de ralenti jusqu'à la vitesse de rotation de ralenti puis jusqu'à la coupure de poussée.

10. Procédé selon l'une des revendications précédentes, caractérisé en ce qu'on réduit le couple de traction du moteur, en continu ou pas à pas.

11. Procédé selon l'une des revendications précédentes, caractérisé en ce que pour exploiter l'état de conduite on détermine le couple de traction du moteur en tenant compte de la vitesse de rotation du moteur et du rapport des vitesses de la transmission.

12. Procédé selon l'une des revendications précédentes, caractérisé en ce que pour déterminer le couple de traction du moteur on tient compte des conditions de fonctionnement du moteur et/ou des paramètres d'état du moteur, notamment de la température du liquide de refroidissement et/ou de l'huile.

13. Procédé selon l'une des revendications précédentes, caractérisé en ce qu'en exploitant l'état de conduite on tient compte de la détection du coefficient d'adhérence et/ou du patinage des roues motrices et/ou du concept d'entraînement.
